# EUROPEAN PATENT APPLICATION

(11) **EP 2 053 822 A1**
(43) Date of publication of application: **29.04.2009**
(21) Application number: 07020737.8
(22) Date of filing: 23.10.2007
(51) Int. Cl.: H04L 29/06

(54) **Method and system for synchronizing the output of a group of end-terminals**

(71) Applicant: Koninklijke KPN N.V., 2516 CK The Hague (NL); Nederlandse Organisatie voor Toegepast-Natuurwetenschappelijk Onderzoek TNO, 2628 VK Delft (NL)
(72) Inventor: Stokking, Hans, Maarten, 2545 HK The Hague (NL); van Deventer, Mattijs, Oskar, 2264 DL Leidschendam (NL); Walraven, Fabian, Arthur, 9711 VM Groningen (NL); Niamut, Omar, Aziz, 3131 HV Vlaardingen (NL)
(74) Representative: Wuyts, Koenraad Maria

(57) **Abstract**

A method is described for synchronizing the transmission of a stream to a group of end-terminals. The method is used in a system comprising a station transmitting a packetized stream over a network to at least a first and second access node. Each access node comprises a variable delay unit and each access node is connected to one or more end-terminals. In the method the synchronization unit receives arrival time information of a packet in the broadcast stream at the first and second access node. Delay information is calculated for the first and second access node on the basis of the arrival time information of the packet. Further, the delay information is transmitted to the first and second access node so that the variable delay unit in the first and second access node is able to transmit the broadcast stream to the first and second end-terminal in a substantially synchronized way.

## Description

### Field of the invention

The invention relates to method and system for synchronizing the output of a group of end-terminals. The invention further relates a synchronization unit and access node for use in such system.

### Background of the invention

New multi-media techniques such as Voice over IP (VoIP) and Internet Protocol Television (IPTV) open a whole range of new multi-media services. One type of these services enable a group of users to separately watch the same TV channel and communicate with each other using text, audio and/or video. Such services require that the output signal of the end-terminals is transmitted at the same time to all users in the group. In other words, the outputs of the display devices in the group, e.g. televisions, PDAs, PCs or a combination thereof, should be synchronized.

In an IPTV system the TV channel signal is typically transmitted as one or more packetized streams over an high-bandwidth IP network of an operator via edge routers and access nodes to the end-terminals of the subscribers to such services. During transmission of the streams, the packets are subjected to unknown delays in the network such as transmission delays, differences in network routes and differences in coding and decoding delays. As a consequence the temporal relationship between packets of audio and video streams received at one end-terminal and those received at another end-terminal will be disturbed.

To stream the IPTV content to the end-terminals usually the Real-Time Transport Protocol (RTP) is used. RTP provides sequence numbering and time stamping. Using RTP the temporal relation in one stream (intra-stream synchronization) and between associated streams (inter-stream synchronization) can be restored.

In order to achieve group-synchronization or inter-destination synchronization (as required by the services as referred to above) further measures are necessary. Several techniques are known and all employ time-stamping and variable-delay buffers in the end-terminals. A variable-delay buffer is capable of delaying a stream for a certain amount of time.

In the article "An Application-Level QoS Comparison of Inter-Destination Synchronization Schemes for Continuous Media Multicasting" by Nunone et al.(IEICE trans. Commun. vol. 87, 2004, pp. 3057-3067) two types of inter-destination synchronization schemes are described. A first type uses a central synchronization master, which collects timing information from all end-terminals in the group and adjusts the output timing by distributing control packets to the end-terminals. A second type regards a distributed control scheme, wherein each end-terminal multicasts all timing information to all other end-terminals in the group. Implementation of such schemes in a typical IPTV system introduces however certain problems.

A first problem relates to the limited scalability of the proposed schemes. A central synchronization master is only capable of handling a limited number of end-terminals. Further, a distributed scheme requires a multitude of multicast channels, which is a limited resource.

A second problem relates to the use of controllable variable-delay buffers in the end-terminals. These buffers and the additional functionality for receiving and transmitting timing information imply increased costs of the end-terminal and the inability to use legacy terminals that do not have these capabilities. Moreover, if a user of an end-terminal joins a synchronized group, the local buffering at the end-terminals takes a significant adaptation time before the user is in synchronization with the other end-terminals in the group.

### Summary of the invention

It is an object of the invention to reduce or eliminate at least one of the drawbacks of synchronization schemes known in the prior art and to provide a method and system for synchronizing the output of a group of end-terminals.

The method according to the invention is used in a system comprising a station transmitting a packetized stream to at least a first access node connected to a first set of end-terminals in the group and a second access node connected to a second set of end-terminals in the group. Each access node comprises a variable delay unit and is capable of determining the arrival time of packets in the stream. Further, each access node is connected to at least one synchronization unit for calculating delay information.

The method comprises the steps of: (i) receiving first arrival time information of a packet arriving at the first access node and second arrival time information of a packet arriving at the second access node; (ii) calculating delay information for the first and second access node on the basis of the first and second arrival time information; and (iii) providing the first access node and second access node with the delay information enabling the variable delay unit of the access node to delay transmission of the stream to the end-terminals such that the output of the group of end-terminals is substantially synchronized.

The method effectively synchronizes the output of the end-terminals connected to the access nodes, as the network delays are mainly generated within the network and not in the access lines connecting the access nodes to the end-terminals. By synchronizing all or at least a large group of access nodes in the network of the operator all viewers connected with an end-terminal, e.g. a set-top box, to these synchronized access nodes are capable of viewing the broadcasted program, such as a live soccer game, at the same time. The invention thus allows large groups of viewers to watch a TV channel in a synchronized way.

The method according to the invention further eliminates the necessity of an adaptive-delay buffer and associated electronics in the end-terminals. Every stream transmitted by the access nodes over the access line to the end-terminals is in sync. Moreover, when changing to another TV channel the output of the end-terminal is automatically in synchronization with the other end-terminals in the group watching that particular TV channel.

In one embodiment of the invention the first and second arrival time information are determined on the basis of the time of a central clock. The use of a central clock in the network allows simple and accurate calculation of the delays. Further, using a central clock the access nodes do not need to be aware of each other.

In a further embodiment of the invention the first and second arrival time information are determined on the basis of the time of a first clock located at the first access node and a second clock located at the second access node. The use of local clocks does not require an external clock synchronization method to be implemented in the access nodes. Further, the use of local clocks is oblivious to time zones and thus does not require knowledge in which time zone the access nodes are located.

In one embodiment the system comprises one synchronization unit performing the steps as defined in the method as described above.

In a further embodiment, the synchronization unit further performs the step of: selecting from the delay information a first delay for use in the variable delay of the first access node and a second delay for use in the variable delay of the second access node, and transmitting the first delay to the first access node and/or the second delay to the second access node. This way the synchronization unit both calculates and selects the delays and transmits the appropriate delay to each access node.

In one embodiment the synchronization unit may be located in a server or, in another embodiment, in the first access node or the second access node.

In a further embodiment the first and second access node comprise a first and second synchronization unit respectively, wherein each access node comprises means for communicating arrival time information to the other access nodes. The method comprises the steps of:
- the first synchronization unit receiving the second arrival time information transmitted by the second synchronization unit;
- the second synchronization unit receiving the first arrival time information transmitted by the first synchronization unit;
- the first and second synchronization unit calculating a first and second delay respectively on the basis of the first and second arrival time information enabling the variable delay unit in the first and second access node to delay transmission of the stream to the end-terminals such that the output of the group of end-terminals is substantially synchronized.
Using a synchronization unit located at each access node eliminates the use of central synchronization unit in the network.

In one embodiment at least one synchronization unit further performs the steps of:
- obtaining the transmission rate of the stream;
- selecting a reference packet;
- calculating the arrival time of the reference packet at each access node;
- determining the delay information by calculating the delays for each access node relative to the most lagged access node.
Collection of the arrival time information of a packet at each access note and the transmission rate of the stream and selection of one packet as the reference packet allows the synchronization unit to calculate the arrival time of the reference packet at each access node. It further allows the synchronization unit to determine, which access node is the most lagged access node (i.e. the access node which was the last to receive the reference packet).

In yet a further embodiment the packet in the stream comprises a time-stamp and/or a frame number. In an other embodiment the stream is a multicast stream.

In alternative embodiments the access node may be an Digital Subscriber Line Access Multiplexer (DSLAM), an Cable Modem Termination System (CMTS), an optical access node or an edge router. The access node may be generally defined as the last or one of the last active components in the network of the operator. These access nodes are located at the edge (or border) of the network of the operator. The access lines from the access node to the end-terminals are therefore substantially free of delays in the network (e.g. transmission delays, differences in network routes and differences in coding and decoding delays). Synchronization of the access nodes thus effectively synchronizes the output of a group of end-terminals connected to the access nodes.

The invention also relates to a system for synchronizing the output of a group of end-terminals comprising: a station transmitting a packetized stream; at least a first access node connected to a first set of end-terminals in the group and a second access node connected to a second set of end-terminals in the group, each access node comprising a variable delay unit and is capable of determining arrival time information of a packet in the stream; and, at least one synchronization unit connected to the access nodes, the synchronization unit comprising: means for receiving first arrival time information of a packet arriving at the first access node, means for receiving second arrival time information of a packet arriving at the second access node, means for calculating delay information for the first and second access node on the basis of the first and second arrival time information, and means for providing the delay information to the first access node and second access node.

The invention also relates to a synchronization unit and an access node for use in a system as described above.

The invention will be further illustrated with reference to the attached drawing, which schematically show embodiments according to the invention. It will be understood that the invention is not in any way restricted to these specific embodiments.

### Brief description of the drawings

Fig. 1 depicts an exemplary embodiment of the invention comprising a central synchronization unit.
Fig. 2 depicts the flow of information in a system according to the invention comprising a central clock and a central synchronization unit.
Fig. 3 depicts an exemplary embodiment of a distributed synchronized system.

### Detailed description

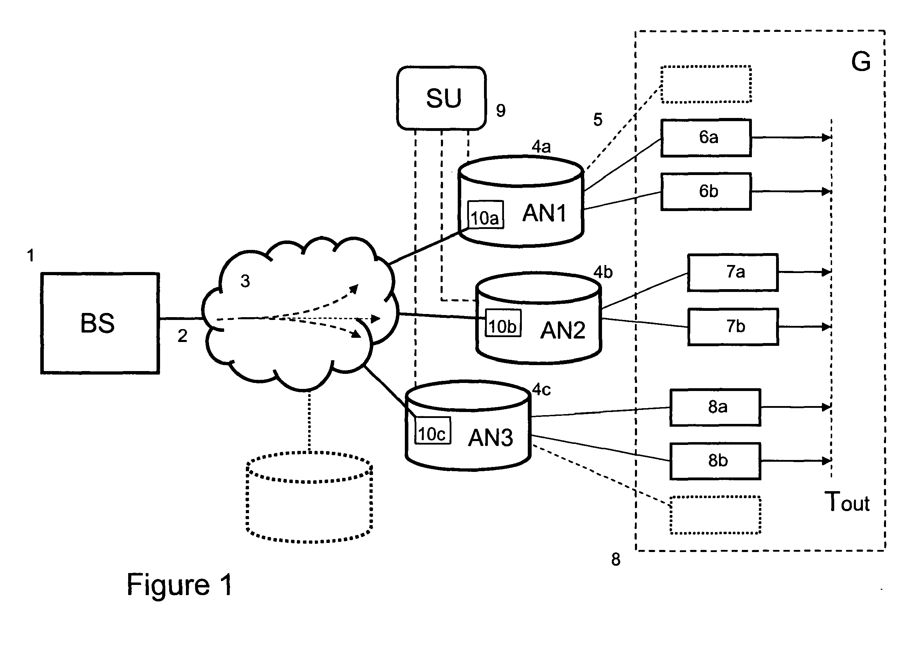

Fig. 1 illustrates a first system according to the invention. A broadcast station (BS) 1, preferably an IPTV system, transmits a packetized transport stream 2, typically a multicast stream, via an IP network 3 of an operator to a number of access nodes (AN1,AN2,AN3,...;4a,4b,4c,...).

The video content in the stream may be compressed using for example MPEG-2 or MPEG-4. Further, the Real-time Transport Protocol (RTP) may be used to stream the IPTV content over the network. The services provided by RTP include sequence numbering, time stamping and delivery monitoring allowing synchronization of the packets in one stream and between associated streams so that consecutive frames in a stream are played at the correct time.

The access nodes may be an Digital Subscriber Line Access Multiplexer (DSLAM), an Cable Modem Termination System (CMTS), an optical access node or an edge router. The access node may be generally defined as the last or one of the last active components in the network of the operator, connecting the high bandwidth IP network 3 of the operator via access lines 5, e.g. DSLs, to a set of end-terminals (6a,6b;7a,7b;8a,8b).

Each end-terminal is connected to one or more display units. The sets of end-terminals (6a,6b;7a,7b;8a,8b) form a group (G) 8 of end-terminals to which one or more IPTV services may be delivered. The display unit may be a television, a personal computer, a personal digital assistant (PDA) or any other device capable of presenting the audio/video stream to a user. The end-terminal may use the Internet Group Management Protocol (IGMP) to request the access node to transmit a selected TV channel to the end-terminal.

Synchronization of the output of the end-terminals is realized by a synchronization unit 9. It allows the access nodes to compensate the network delays in the IP network 3 (e.g. the processing-, queuing-, routing-, transmission- and propagation delays in the network). To that end, each access node comprises a variable-delay buffer 10a,10b,10c capable of delaying the transmission of a stream to the end-terminals.

Fig. 1 illustrates a central synchronization scheme in which the synchronization unit 9 collects arrival time information from the access nodes and calculates delay information for the variable-delay buffer in the access nodes. The algorithm used by the synchronization unit assumes that the frame-rate, i.e. the number of frames per second of the streaming content (e.g. video), is known.

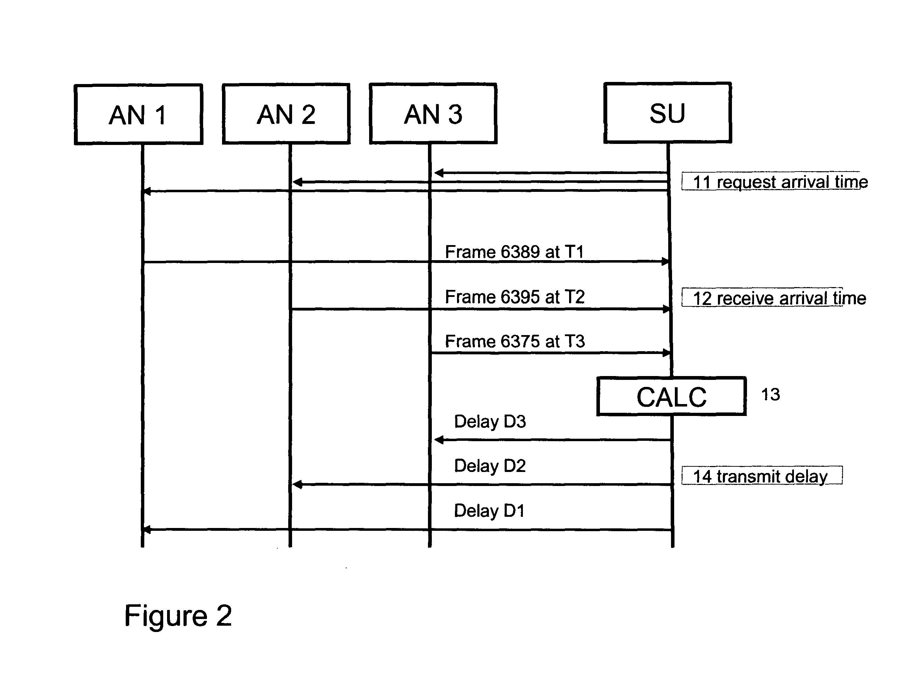

The information transfer between the synchronization unit and the access nodes is illustrated in more detail in Fig. 2. In a first step 11 the synchronization unit requests the access nodes to send the arrival time information of a particular video frame in the stream. In a second step 12 the access nodes will send this information, typically RTP information of a frame including the frame number and the time of arrival (T1,T2,T3) of the frame at the access node, to the synchronization unit. Thereafter, the synchronization unit will calculate in a third step 13 the delay information. To that end, the synchronization unit is capable of: (i) selecting one of the frame numbers, preferably the lowest or highest reported by the access nodes, as a reference frame, (ii) calculating for each access node the time related to this reference frame using a known frame-rate, (iii) determining the most "lagged" access node and (iv) calculating the delays for the other access node or nodes. After calculation the delays are transmitted in a forth step to the access nodes.

The synchronization unit in Fig. 2 receives the following arrival time information from the access nodes AN1, AN2 and AN3:
AN1 received frame 6389 at 14:46:59:2645 (T1)
AN2 received frame 6395 at 14:47:05:4112 (T2)
AN3 received frame 6375 at 14:46:59.7600 (T3)

Given a frame rate of 25 frames per second, the clock times for the lowest frame number, i.e. frame 6375, for each access node can be calculated. The first access node received frame 6375 at T1-(6389-6375)/25 = 14:46:58.7045 (T1'), the second access node received frame 6375 at T2-(6395-6375)/25 = 14:47:04.6112 (T2') and the third access node received frame 6375 at T3 = 14:46:59.7600 (T3'=T3):
AN1 received frame 6375 at 14:46:58.7045 (T1')
AN2 received frame 6375 at 14:47:04.6112 (T2')
AN3 received frame 6375 at 14:46:59.7600 (T3'=T3)

The most "lagged" access node, i.e. the access node which received the reference frame 6375 last, is access node AN2, so the synchronization unit determines the delays for each access node as follows:
Delay D1 for AN1 = T2' - T1' = 5.9067
Delay D2 for AN2 = 0
Delay D3 for AN3 = T2' - T3' = 4.8512

These delays are subsequently send to the access nodes and used by the variable delay buffer to delay transmission of the stream to the end-terminals. That way the content of a particular frame in the originally transmitted stream is transmitted to all users in the group at the same time Tₒᵤₜ as schematically indicated in Fig. 1.

In the central scheme described above the access nodes obtain their time from a central clock. In another embodiment, it is also possible to use local clocks, e.g. clocks located at the access nodes, to synchronize the output of the access nodes. In that scheme the Network Time Protocol (NTP) may be used to synchronize the local clocks in the access nodes before calculating the delays.

Alternatively, if very low delay connections between the access nodes are available, the access nodes may share their clock time with each other. In reporting the frame numbers to the central synchronization unit, the access nodes not only report their own clock time, but also the clock time of the others. This way the synchronization unit first may synchronize the clocks of the different access nodes by (i) picking one clock as the reference clock, (ii) calculating per clock the difference with the reference clock, and (iii) adjusting all clock times such that they are reference clock times. Thereafter, the delays may be calculated as described above in the central clock/central synchronization unit scheme.

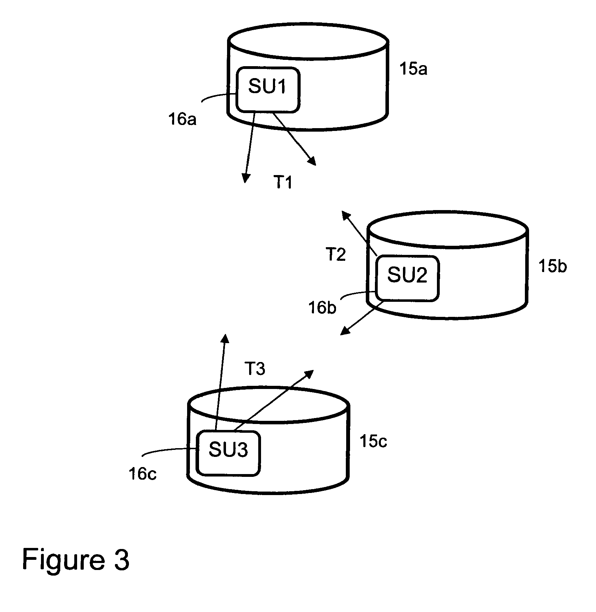

In a further embodiment a number of synchronization units may be used, which are distributed over the network. Fig. 3 depicts an example of such distributed scheme wherein each access node 15a,15b,15c comprises a synchronization unit SU1,SU2,SU3. Each synchronization unit is capable of transmitting the arrival time information T1,T2,T3 of a frame arriving at the access node in which the synchronization unit is located to all other synchronization units. Each synchronization unit is thus capable of calculating the appropriate delay time for the variable-delay unit in a similar way as discussed above.

The synchronization unit may be a server in the network hosting the synchronization function, e.g. a software program, or alternatively it may be a functional unit in one or more access nodes.

The invention is not limited to the embodiments described above, which may be varied within the scope of the accompanying claims.

## Claims

1. Method for synchronizing the output of a group of end-terminals in a system comprising a station transmitting a packetized stream to at least a first access node connected to a first set of end-terminals in the group and a second access node connected to a second set of end-terminals in the group, wherein each access node comprises a variable delay unit, each access node is capable of determining the arrival time of packets in the stream and each access node is connected to at least one synchronization unit for calculating delay information, the method comprising the steps of:
- receiving first arrival time information of a packet arriving at the first access node and second arrival time information of a packet arriving at the second access node;
- calculating delay information for the first and second access node on the basis of the first and second arrival time information;
- providing the first access node and second access node with the delay information enabling the variable delay unit of the access node to delay transmission of the stream to the end-terminals such that the output of the group of end-terminals is substantially synchronized.

2. Method according to claim 1, wherein the first and second arrival time information are determined on the basis of the time of a central clock.

3. Method according to claim 1, wherein the first and second arrival time information are determined on the basis of the time of a first clock located at the first access node and a second clock located at the second access node.

4. Method according to any of claims 1 to 3, wherein the system comprises one synchronization unit performing the steps as defined in claim 1.

5. Method according to claim 4, wherein the synchronization unit further performs the step of:
- selecting from the delay information a first delay for use in the variable delay of the first access node and a second delay for use in the variable delay of the second access node;
- transmitting the first delay to the first access node and/or the second delay to the second access node.

6. Method according to any of claims 1 to 5, wherein the synchronization unit is located in a server, the first access node or the second access node.

7. Method according to any of claims 1 to 3, wherein the first and second access node comprise a first and second synchronization unit respectively, wherein each access node comprises means for communicating arrival time information to the other access node, the method further comprising the steps of:
- the first synchronization unit receiving the second arrival time information transmitted by the second synchronization unit;
- the second synchronization unit receiving the first arrival time information transmitted by the first synchronization unit;
- the first and second synchronization unit calculating a first and second delay respectively on the basis of the first and second arrival time information enabling the variable delay unit in the first and second access node to delay transmission of the stream to the end-terminals such that the output of the group of end-terminals is substantially synchronized.

8. Method according to any of claims 1 to 7, wherein at least one synchronization unit further performs the steps of:
- obtaining the transmission rate of the stream;
- selecting a reference packet;
- calculating the arrival time of the reference packet at each access node;
- determining the delay information by calculating the delays for each access node relative to the most lagged access node.

9. Method according to any of claims 1 to 8, wherein the packet in the stream comprises a time-stamp and/or a frame number.

10. Method according to any of claims 1 to 9, wherein the access node is a Digital Subscriber Line Access Multiplexer (DSLAM), Cable Modem Termination System (CMTS), an optical access node or an edge router.

11. System for synchronizing the output of a group of end-terminals comprising:
- a broadcasting station transmitting a packetized stream;
- at least a first access node connected to a first set of end-terminals in the group and a second access node connected to a second set of end-terminals in the group, each access node comprising a variable delay unit and is capable of determining arrival time information of a packet in the stream;
- at least one synchronization unit connected to the access nodes, the synchronization unit comprising: means for receiving first arrival time information of a packet arriving at the first access node, means for receiving second arrival time information of a packet arriving at the second access node, means for calculating delay information for the first and second access node on the basis of the first and second arrival time information, and means for providing the delay information to the first access node and second access node.

12. A synchronization unit for synchronizing the output of a group of end-terminals wherein a first set of end-terminals in the group is connected to a first access node and a second set of end-terminals in the group is connected to a second access node, the synchronization unit comprising means for receiving first arrival time information of a packet from a packetized stream arriving at the first access node and receiving second arrival time information of a packet arriving at the second access node, means for calculating delay information for the first and second access node on the basis of the first and second arrival time information, and means for transmitting the delay information to the first access node and second access node.

13. An access node for use in a system according to claim 11 comprising:
- a variable delay unit;
- means for transmitting the arrival time of a packet in the stream to the synchronization unit; and
- means for receiving delay information for the variable delay unit enabling the access node to transmit the stream to the end-terminals at a predetermined point in time.
